# FASCICULE DE BREVET EUROPEEN

(11) **EP 0 759 279 B1**
(45) Date de publication et mention de la délivrance du brevet: **09.02.2000**
(21) Numéro de dépôt: 95401922.0
(22) Date de dépôt: 21.08.1995
(51) Int. Cl.: A47J 37/06

(54) **Grillade double-face automatisee**
Automatisierter doppelseitiger Grill
Automated double-faced grill

(43) Date de publication de la demande: 26.02.1997
(73) Titulaire: TECHNYFORM PRODUCTIONS, 91700 Fleury Merogis (FR)
(72) Inventeur: Voisine, Jean-Claude, F-18000 Bourges (FR)
(74) Mandataire: Desaix, Anne

(56) Documents cités:
- FR-A- 2 543 406
- FR-A- 2 575 913
- FR-A- 2 588 062
- FR-A- 2 638 627
- US-A- 4 483 239
- US-A- 4 852 545
- US-A- 5 341 727

## Description

La présente invention concerne d'une manière générale les grills de cuisson et dispositifs analogues, plus particulièrement un appareil de cuisson permettant d'effectuer une cuisson double-face automatisée et contrôlée de produits alimentaires, notamment de morceaux de viande hachée ou analogues.

Dans ce but, les inventeurs ont mis au point des moyens permettant la détermination ainsi que le contrôle automatique de différents paramètres inhérents à la cuisson des produits, plus particulièrement ceux relatifs à la précision de déplacement ainsi que de positionnement de la ou des plaques de cuisson.

Dans le domaine de l'industrie alimentaire, le facteur de régularité dans la préparation des produits tant dans leur composition, leur consistance ou leur forme, est primordial dans la fidélisation de la clientèle, et ceci plus particulièrement dans le domaine de la restauration-rapide ou "fast-food". En effet, ce secteur se doit de tenir compte des critères de qualité extrêmement bien établis dans l'esprit du consommateur. Ces critères se rapportent non seulement à la notion de rapidité de service qui est intrinsèque à ce type de restauration, mais également à des paramètres relatifs à l'aspect extérieur du produit notamment à l'épaisseur des pièces de viande, leur diamètre ou leur température de cuisson.

Les appareils de cuisson du type comportant un plateau de cuisson inférieur fixe et un plateau de cuisson supérieur mobile, parfois appelé appareil de cuisson à mâchoire ou gril à mâchoire sont biens connus. Egalement, le fait de pouvoir réduire notablement la durée de cuisson des produits alimentaires par la mise en oeuvre du principe de cuisson double face est largement décrit dans l'art antérieur, entre autres dans les documents FR 2 575 913, FR 2 588 062 ou FR 2 638 627. Ces documents décrivent généralement des appareils de cuisson utilisés dans la restauration, plus particulièrement dans la restauration rapide, et assurant un débit relativement continu des produits alimentaires. Ces appareils de cuisson présentent cependant un certain nombre de désavantages qui, dans ce domaine, prennent une ampleur considérable dans la mesure où ils affectent la qualité de cuisson des produits alimentaires. En effet, l'art antérieur disponible aujourd'hui dans le domaine de la cuisson double face, présente des appareils à utilisation manuelle et par conséquent les désavantages inhérent à ce mode d'utilisation. D'un point de vue pratique, le fait de lever et abaisser un couvercle de cuisson manuellement, ne permet pas à l'utilisateur d'obtenir de façon régulière, des produits de forme et/ou de cuisson optimale. En effet, l'optimisation de la cuisson des produits passe notamment par la recherche d'un parallélisme entre une plaque supérieure de cuisson et la plaque inférieure correspondante. Dans l'art antérieur, ce parallélisme doit être continuellement rectifié par la manipulation de manettes, tel que décrit par exemple dans le brevet FR 2 638 627. En outre, il s'avère aujourd'hui important de résoudre également les problèmes relatifs à la détermination de l'espacement parallèle entre la plaque supérieure et la plaque inférieure lors de la cuisson du produit alimentaire. En effet, le fait de pouvoir définir cet espacement a un effet direct sur la cuisson ainsi que le sur la forme, et plus particulièrement le diamètre, lorsqu'il s'agit de pièces de viande hachée

Ainsi l'invention concerne un appareil de cuisson double face comprenant au moins une plaque inférieure de cuisson et au moins une plaque supérieure de cuisson correspondante, caractérisé en ce qu'il comprend un dispositif automatique comprenant des moyens d'actionnement des moyens d'arrêt d'au moins une desdites plaques, et des moyens de guidage de plaque permettant l'obtention d'une disposition du plan de la plaque supérieure de façon sensiblement parallèle au plan de la plaque inférieure.

Ainsi, l'invention permet à l'utilisateur, par l'automatisation de l'appareil, d'éviter la manipulation du couvercle de la plaque de cuisson, mais également de se consacrer à d'autres tâches, par exemple à la préparation des produits alimentaires ou au service, la descente ainsi que le relevage de la plaque actionnée s'effectuant de façon automatique en fin de cycle de cuisson.

Les brevets US-A-4 483 239 et US-A-5 341 727 se rapportent à un appareil de cuisson double face selon le préambule de la revendication 1, comprenant au moins une plaque inférieure et une plaque supérieure de cuisson correspondante, et un dispositif automatique comprenant des moyens d'actionnement et d'arrêt d'au moins une de ces plaques, ainsi que des moyens de guidage de celle-ci, permettant l'obtention d'une disposition du plan de la plaque supérieure de façon sensiblement parallèle au plan de la plaque inférieure.

Mais ces solutions ne permettent pas un positionnement précis des deux plaques pour ajuster très exactement l'écartement à ménager entre elles, notamment parce qu'elles ne réalisent pas un déplacement linéaire de l'une par rapport à l'autre en fin de course.

La présente invention offre entre autres l'intérêt de pouvoir fournir des produits, plus particulièrement des morceaux de viande hachée cuits de façon rapide et régulière, ces morceaux de viande ayant, en phase de cuisson, une épaisseur uniforme extrêmement précise, cette précision étant de l'ordre du dixième de millimètre, ainsi qu'un diamètre qui variera selon l'épaisseur choisie. Ces résultats sont obtenus grâce au contrôle électronique et mécanique de la course de la plaque de cuisson, résultant en un espacement parallèle ci-dessus évoqué. Ce parallélisme des plaques, résultant d'un rapprochement parallèle de celles-ci, est obtenu grâce à des moyens décrits dans l'invention détaillée ci-après. Il est entendu que les paramètres d'épaisseur, mais également les paramètres relatifs notamment à la température et le temps de cuisson sont variables et peuvent être préréglés. Cette facilité de préréglage, matérialisée par un dispositif de commande ci-après décrit, permet d'obtenir de façon régulière la précision recherchée dans l'obtention de l'espacement parallèle.

En outre, l'appareil de cuisson selon la présente invention est caractérisé en ce que ledit dispositif automatique comprend au moins un vérin du type électrique comprenant un limiteur de couple réglable. Ce limiteur de couple du type "glissement" est monté sur la tête de vérin.

Les différents vérins utilisés dans la présente invention sont produits par la société HYROMATIC, Z.I. du Paradis, 18500 Mehun sur Yèvre, France.

Plus particulièrement, un appareil de cuisson selon l'invention est caractérisé en ce que les moyens de guidage comprennent des moyens de translation oblique permettant, lors du mouvement d'une des plaques de cuisson, une trajectoire linéaire oblique par rapport au plan de la plaque vers laquelle ledit mouvement s'effectue, de façon à ce que les plaques supérieure et inférieure conservent une disposition sensiblement parallèle.

Ainsi, afin d'obtenir l'espacement parallèle ci-dessus mentionné, les inventeurs ont donc associé aux moyens d'actionnement de la plaque, des moyens de guidage de plaque qui permettent une transformation de la trajectoire d'abaissement de la plaque, qui dans une première phase est circulaire, en une trajectoire rectiligne selon un axe oblique (A-A'), le plan de ladite plaque restant horizontal.

En effet, une trajectoire circulaire de la plaque actionnée ne fournit un parallélisme final entre les deux plaques de cuisson que pour un espacement déterminé, alors que la transformation de trajectoire ci-dessus évoquée permet d'obtenir un parallélisme quel que soit l'espacement parallèle final de plaques souhaité.

Ainsi, l'invention concerne un appareil de cuisson double face, comprenant au moins une plaque inférieure fixe et une plaque supérieure mobile de cuisson, la plaque supérieure étant portée par un couvercle et un dispositif automatique comprenant des moyens d'actionnement et des moyens d'arrêt de la plaque supérieure pour lui faire subir un déplacement en pivotement suivi d'une translation linéaire pour l'amener jusque dans une position déterminée où elle est parallèle au plan de la plaque inférieure, et ménage celle-ci avec un espace déterminé, caractérisé en ce que les moyens d'actionnement en translation de la plaque supérieure comportent deux axes de forme portés par le couvercle et logés dans les orifices d'insertion prévus sur les moyens d'actionnement, les orifices présentant une superficie légèrement supérieure à la section de l'axe, de sorte que la translation du couvercle portant la plaque supérieure s'effectue, en fin de déplacement en translation selon une direction (A A') inclinée par rapport aux plans parallèles des deux plaques.

De manière préférée, l'appareil de cuisson est caractérisé en ce que les moyens d'actionnement permettent le levage et l'abaissement de la plaque supérieure de cuisson, les moyens de translation oblique étant préférentiellement associés à ladite plaque supérieure de cuisson.

Egalement, les moyens d'actionnement comprennent des éléments de levage et d'abaissement comprenant un bras, de préférence deux, supportant le couvercle recouvrant la plaque supérieure, ledit bras étant monté sur un axe de rotation horizontal.

De plus, dans un appareil de cuisson selon l'invention, lesdits moyens de translation de plaque sont constitués d'une part d'axes de forme prévus sur le couvercle et venant se loger dans des orifices d'insertion prévus sur les moyens d'actionnement, de superficie légèrement supérieure à la section desdits axes, de sorte que, lorsque lesdites plaques arrivent en position choisie, la translation oblique dudit couvercle s'effectue selon un axe (AA').

Par cette articulation couvercle oblique/bras de support, on peut s'assurer d'une cuisson uniforme et homogène des pièces de viande quelle que soit la disposition de celles-ci sur la plaque inférieure de cuisson, puisque la distance séparant les deux plaques est, grâce à la combinaison des moyens ci-dessus décrits, en tout point sensiblement égale.

Dans une première réalisation de l'invention, le dispositif automatique précédemment mentionné est constitué d'un vérin électrique automoteur à vis avec réducteur.

Dans cette réalisation, le moyen provoquant l'arrêt de la plaque actionnée est constitué d'un contrôleur de course multipoints réglable électronique associé au vérin.

L'introduction de ce type de vérin dans le dispositif de levage et d'abaissement de la plaque est à l'origine de différents avantages procurés par la présente invention. En effet, ce moyen peu volumineux peut être notamment disposé dans le bâti de l'appareil de cuisson, et commandé par des moyens électromécaniques ou électroniques.

Bien entendu, les moyens d'actionnement d'une desdites plaques peuvent être éventuellement d'un autre type, par exemple du type vérin hydraulique, ou de tout autre type sous réserve qu'il remplisse les fonctions requises pour l'obtention du résultat recherché.

Dans une deuxième réalisation selon l'invention, les inventeurs ont mis au point un dispositif permettant d'obtenir des résultats équivalents à ceux fournis par la première réalisation. Ce dispositif met en oeuvre des moyens "extérieurs" au vérin, qui dans ce cas est un vérin "simple", asservi auxdits moyens "extérieurs".

Dans ce type de réalisation, l'appareil de cuisson est caractérisé en ce que les moyens d'actionnement des éléments de levage comprennent un vérin électrique « simple » équipé d'un moteur frein et en ce que les moyens d'arrêt de la plaque actionnée comprennent un dispositif inductif comportant au moins un détecteur inductif ainsi qu'un élément de déclenchement dudit détecteur.

Préférentiellement, ce type de réalisation est caractérisé en ce que le dispositif inductif comprend un support fixé à l'appareil de cuisson, une vis de réglage sur laquelle est fixé ledit détecteur, ainsi qu'une came permettant le déclenchement dudit détecteur inductif.

Selon une autre réalisation à « vérin simple », l'appareil de cuisson est caractérisé en ce que les moyens d'arrêt de la plaque actionnée constituent un dispositif comprenant d'une part au moins un détecteur inductif dont la position est réglable sur un support fixé au châssis de l'appareil de cuisson, d'autre part un support fixé au bout d'un bras relié à l'axe de rotation de la plaque supérieure ledit support contenant au moins un curseur pouvant être déplacé le long d'une vis, de sorte à venir se positionner face au détecteur inductif correspondant, provoquant ainsi l'arrêt dudit bras relié à l'axe de rotation. Le curseur a donc ici une fonction de « déclencheur » du détecteur inductif, de façon équivalente à la came ci-dessus mentionnée.

Ces réalisations de l'invention avec détecteurs inductifs sont également équipées de l'articulation de translation linéaire oblique de couvercle ci-dessus décrite, permettant la conservation de l'horizontalité de la plaque actionnée.

De manière préférée, un appareil de cuisson conforme à l'invention comprend de préférence 3 à 5 détecteurs inductifs.

En outre, le fait de pouvoir régler la position de ces détecteurs permet donc de sélectionner l'espacement parallèle résultant entre les deux plaques supérieure et inférieure.

Avantageusement, un appareil de cuisson selon l'invention est caractérisé en ce que le couvercle peut être dissocié du bras de sorte à permettre, par exemple, le dégagement des aliments en cas de panne de courant.

Afin de répondre aux exigences du consommateur et, ainsi que précédemment évoqué, les inventeurs ont conçu et agencé des moyens permettant d'obtenir une excellente fiabilité dans la reproductibilité des produits alimentaires concernés. Une automatisation de ce type d'appareil de cuisson permet d'obtenir de tels résultats.

Dans une réalisation préférentielle, un appareil de cuisson selon l'invention est caractérisé en ce que le dispositif de levage et d'abaissement de la plaque est relié à un système de commande par commutateurs ou touches digitales ou autres, et permettant la sélection de l'espacement parallèle entre la plaque supérieure et la plaque inférieure.

Préférentiellement encore, l'appareil de cuisson est caractérisé en ce que ledit système de commande est programmable et en ce qu'il permet d'intégrer et de contrôler les paramètres relatifs à la cuisson notamment à la température, le temps de cuisson ou l'espacement parallèle entre les plaques supérieure et inférieure de cuisson.

Il va de soi que ce type d'appareil de cuisson peut comprendre plusieurs paires de plaques supérieures et inférieures de cuisson, chaque paire pouvant être indépendamment commandée par le système de commande ci-dessus évoqué.

Dans le domaine relatif aux grillades double faces, les moyens de chauffage des plaques sont choisis en fonction de l'utilisation spécifique à laquelle sont consacrés les appareils de cuisson. Ainsi, en ce qui concerne les plaques de cuisson, les utilisateurs pourront se servir notamment d'un chauffage électrique, au gaz ou à induction.

Dans le cadre de la présente invention, tout mode de chauffage actuellement connu est susceptible d'être adapté. En effet, bien que dans le cadre d'une réalisation préférée, le chauffage des plaques de cuisson soit effectué au moyen de résistances électriques, un chauffage des plaques de cuisson, effectué par exemple au gaz ou par induction, entre de toute évidence dans le cadre de l'invention.

De manière avantageuse, la présente invention propose différents modèles de surfaces de plaques, aussi bien pour ce qui concerne la plaque inférieure que la plaque supérieure. Ainsi, selon différents modèles de réalisation, entreront dans le cadre de la présente invention des appareils de cuisson caractérisés en ce que la plaque de cuisson inférieure et/ou supérieure sont lisses ou rainurées.

Egalement, les inventeurs se sont penchés sur le choix des matières premières homogènes ou alliages, pouvant constituer lesdites plaques. De toute évidence, tout matériau ou revêtement connu en tant que matériau utilisable pour la fabrication de plaque de cuisson pourrait être adapté à l'appareil de cuisson selon l'invention.

De manière préférentielle, la matière constituant la plaque de cuisson inférieure et/ou de cuisson supérieure est de l'acier doux ou de l'acier mi-dur chromé. En outre, la matière constituant ces plaques peut alternativement être notamment l'inox, une matière bi-métal acier doux et inox, ou du téflon.

D'autres caractéristiques et avantages de l'invention ressortiront de la description qui va suivre, à titre d'exemple non-limitatif pour un mode actuellement préféré de réalisation de l'invention, en regard des figures :
FIGURE 1 :
   Vue latérale d'une réalisation d'un mécanisme automatique de levée et de descente d'un couvercle de cuisson par vérin automoteur oblique asservi à un contrôleur de course.
FIGURE 2 :
   Coupe longitudinale d'une réalisation d'un mécanisme automatique de levée et de descente d'un couvercle de cuisson par vérin automoteur vertical asservi à un contrôleur de course.
FIGURE 3 :
   Coupe longitudinale partielle d'une réalisation d'un mécanisme d'un couvercle de cuisson par vérin simple et dispositif d'arrêt avec came et détecteurs inductifs.
FIGURES 4 et 4':
   Coupe longitudinale d'une réalisation du montage des axes de forme bras-couvercle.
FIGURE 5 :
   Coupes transversale et longitudinale d'une réalisation d'une articulation des bras support couvercle.
FIGURE 6 :
   Vue en plan d'une réalisation du réglage des espacements par commutateurs.
FIGURE 7 :
   Vue en plan d'une réalisation du réglage des espacements par clavier digital.
FIGURE 8 :
   Vue en plan d'une réalisation du réglage des espacements, de la température et du temps par clavier digital.

### DESCRIPTION DETAILLEE

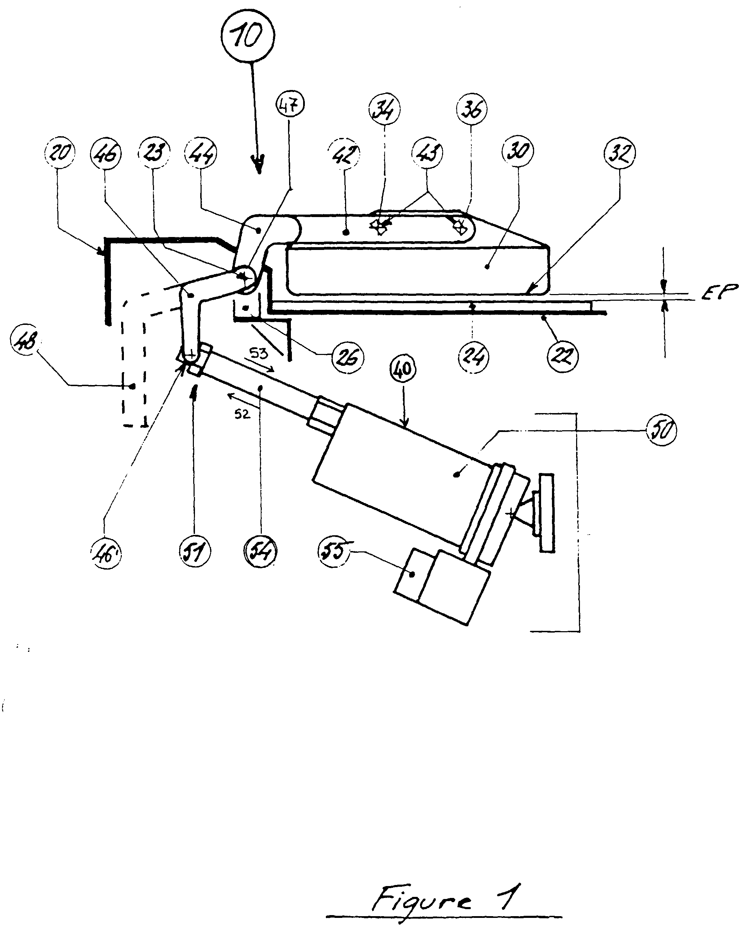

Se référant maintenant à la figure 1, une réalisation d'un des appareils de cuisson selon l'invention, représentée de façon générale par la référence numérique 10, comprend un châssis 20, un couvercle 30, ainsi qu'un dispositif automatique 40 de déplacement du couvercle 30.

Le châssis 20 comprend un élément de support 22 sur lequel est fixée une plaque inférieure de cuisson 24. Le châssis 20 comprend également un ou plusieurs paliers de support 26 à roulements, ainsi qu'un axe de rotation 23.

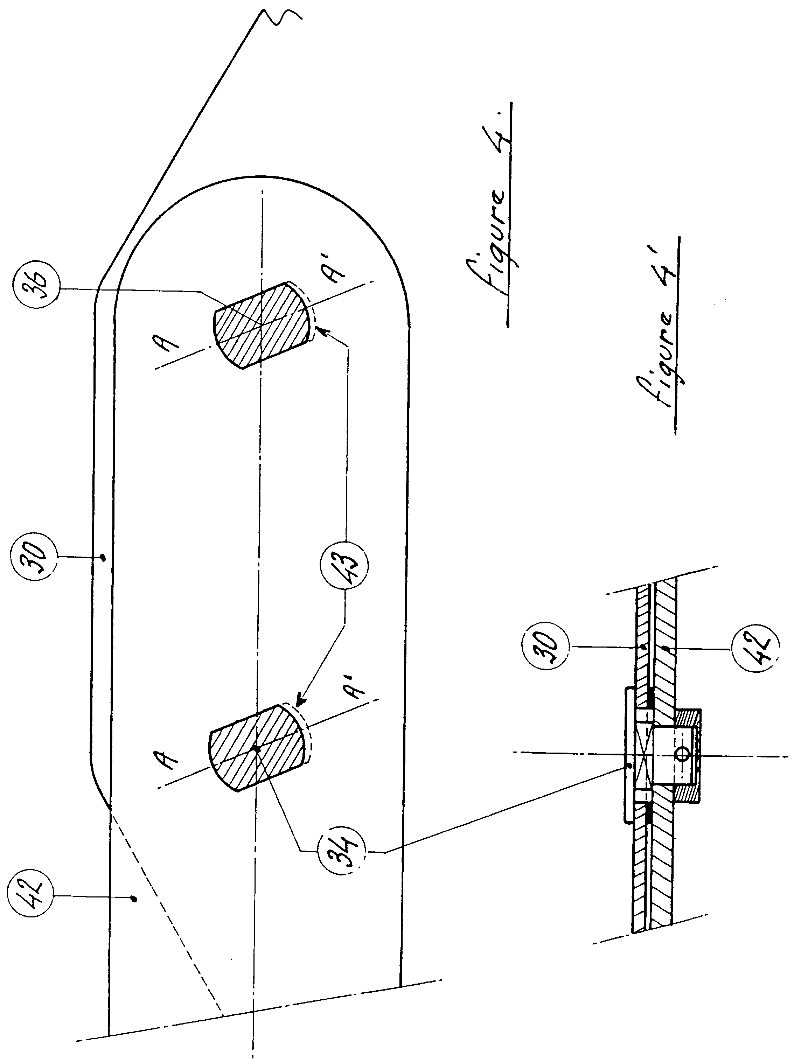

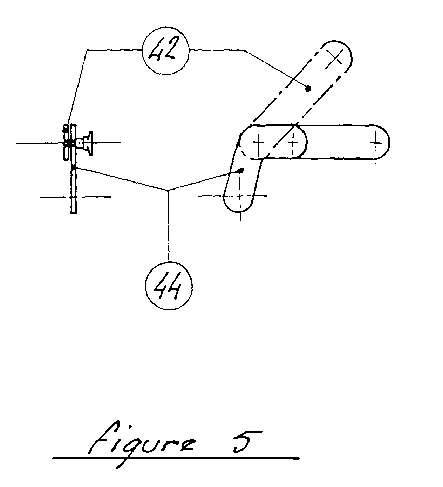

Le couvercle 30 sur lequel est fixée une plaque supérieure de cuisson 32, comporte deux axes de forme 34 et 36. Les axes de forme 34 et 36 qui sont représentés de façon plus détaillée à la figure 4, sont reliés à la partie supérieure du couvercle 30.

Le dispositif automatique 40 comprend un bras supérieur 42, un élément de jonction 44, un bras inférieur 46, ainsi qu'un vérin 50. Sur la figure 1, une came 48 représentée en « pointillés », vient s'ajouter dans la réalisation mettant en oeuvre les détecteurs inductifs et le vérin « simple ». Cette réalisation, représentée sur la figure 3, sera décrite plus en détail ci-après. Le bras supérieur 42 comprend deux orifices d'insertion 43 dans lesquels sont insérés les axes de forme 34 et 36 du couvercle 30. Tel que démontré de façon plus détaillée à la figure 4, les orifices d'insertion 43 ont une superficie légèrement supérieure aux axes de forme 34 et 36.

Se référant de nouveau à la figure 1, le bras supérieur 42 du dispositif automatique 40 est relié à l'élément de jonction 44. L'élément de jonction 44 est fixé à l'axe de rotation 23 du châssis 20. Le bras inférieur 46 est relié à son extrémité inférieure 46' au vérin 50 et à son extrémité supérieure 47 à l'axe de rotation 23. La came 48 est également reliée à une de ses extrémités à l'axe de rotation 23.

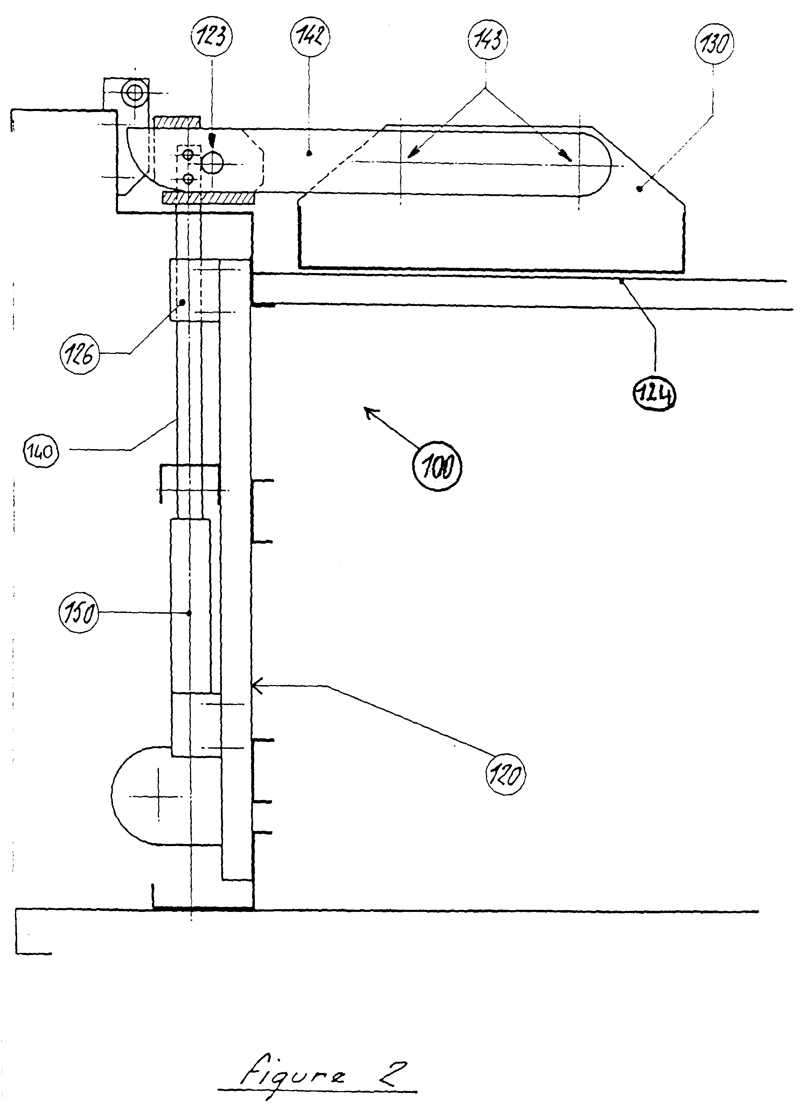

Une réalisation alternative de l'appareil de cuisson de l'invention est présentée à la figure 2. Dans cette figure, l'appareil, représenté de façon générale par la référence numérique 100, comprend un châssis 120, un couvercle de cuisson 130 ainsi qu'un dispositif automatique 140 permettant d'actionner le couvercle 120.

Le châssis 120 comprend un élément de support 122, une plaque inférieure de cuisson 124, un axe de rotation 123, ainsi qu'un palier 126 à roulements. Le palier 126 est disposé de façon à pouvoir recevoir le dispositif automatique 140 qui comprend un vérin 150 en position verticale dont la description sera fournie plus loin.

Le couvercle de cuisson 130 est en tout point identique au couvercle de cuisson 30 décrit à la figure 1.

En ce qui concerne le dispositif automatique 140, ce dernier est légèrement modifié par rapport au dispositif 40 illustré à la figure 1. Le dispositif automatique 140 comporte un bras supérieur 142 comprenant deux orifices d'insertion 143 en tous points semblables aux orifices d'insertion 43 du bras supérieur 42 de la figure 1. Le bras supérieur 142 est directement relié à l'axe de rotation 123. Le dispositif automatique 140 comprend également un vérin 150 disposé de façon perpendiculaire au bras supérieur 142 et relié de façon pivotante à ce dernier.

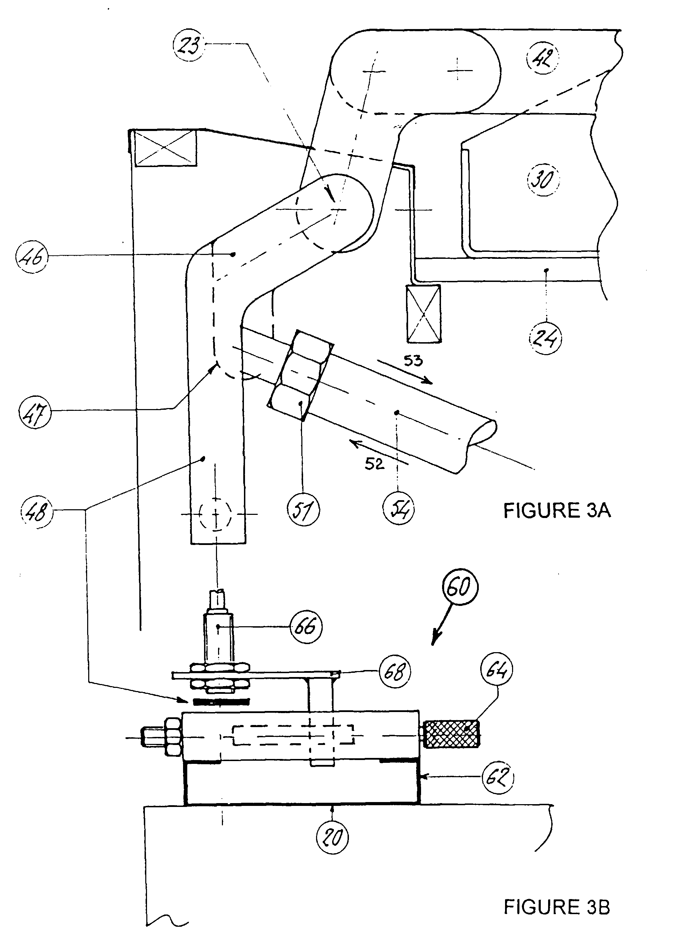

Se référant maintenant aux figures 3A et 3B, on illustre ici une réalisation d'un dispositif à détecteur à détecteur inductif, représenté de façon générale par la référence numérique 60 à la figure 3B, qui peut être utilisé dans la réalisation mettant en oeuvre une came 48 telle qu'illustrée à la figure 1. Dans cette réalisation, mettant en oeuvre un vérin « simple », c'est à dire sans contrôleur de course multipoints, le dispositif 60 comprend un support 62 pouvant être fixé à un châssis, une vis de réglage 64 ainsi qu'une cellule de détection ou détecteur inductif 66 fixée à la vis de réglage 64 par l'entremise du support en « L » 68. La cellule de détection 66 peut être choisie parmi plusieurs types de cellules de détection incluant par exemple les cellules photoélectriques. On notera également l'espacement entre la cellule de détection 66 et la vis de réglage 64 permettant le déplacement d'une came tel que la came 48 illustrée « en pointillés » à la figure 1. Le vérin « simple » ci-dessus mentionné peut se positionner d'une façon équivalente à celle dont est positionné le vérin automoteur de la figure 1.

Se référant de nouveau à la figure 1, lorsqu'il s'agit de faire fonctionner l'appareil de cuisson 10, le couvercle 30 est soulevé par l'action du vérin 50 dans la direction illustrée par la flèche 53. L'action du vérin 50 fait pivoter le bras inférieur 46 qui à son tour fait pivoter l'axe de rotation 23, entraînant ainsi le mouvement du couvercle 30 relié au bras supérieur 42 à son tour relié à l'élément de jonction 44 fixé à l'axe de rotation 23.

Une fois le produit alimentaire placé sur la plaque inférieure de cuisson 24, le couvercle 30 est abaissé par l'action du vérin 50 dans la direction de la flèche 52 (fig 1 et 2). Tel qu'illustré à la figure 4, la superficie légèrement supérieure des orifices d'insertion 43 par rapport aux axes de forme 34 et 36 permet, lorsque le couvercle arrive en position choisie, le glissement du couvercle 30 selon l'axe de déplacement AA'. La phase ultime de déplacement du couvercle 30 correspond donc à une translation oblique vers la plaque inférieure de cuisson 24 de sorte qu'il conserve en fin de course une position horizontale par rapport à la plaque de cuisson inférieure 24, avec un espacement parallèle dont la valeur peut être prédéterminée au dixième de millimètre près. Il y a donc génération et conservation d'un parallélisme, et ceci quel que soit l'espacement parallèle souhaité. Le relevage du couvercle 30 s'effectuera automatiquement grâce à la programmation par l'action du vérin dans le sens de la flèche 53.

Lorsqu'un vérin simple est utilisé, le dispositif 60 (voir figure 3) permet de régler de façon très précise le choix de l'espacement entre le couvercle 30 et la plaque inférieure de cuisson 24. On peut également utiliser un vérin équipé d'un contrôleur de course multipoints 55 (figure 1) réglable électroniquement. Cette réalisation permet le choix de l'espacement entre les plaques supérieure 24 et inférieure 32, par l'intermédiaire d'un tableau de commande.

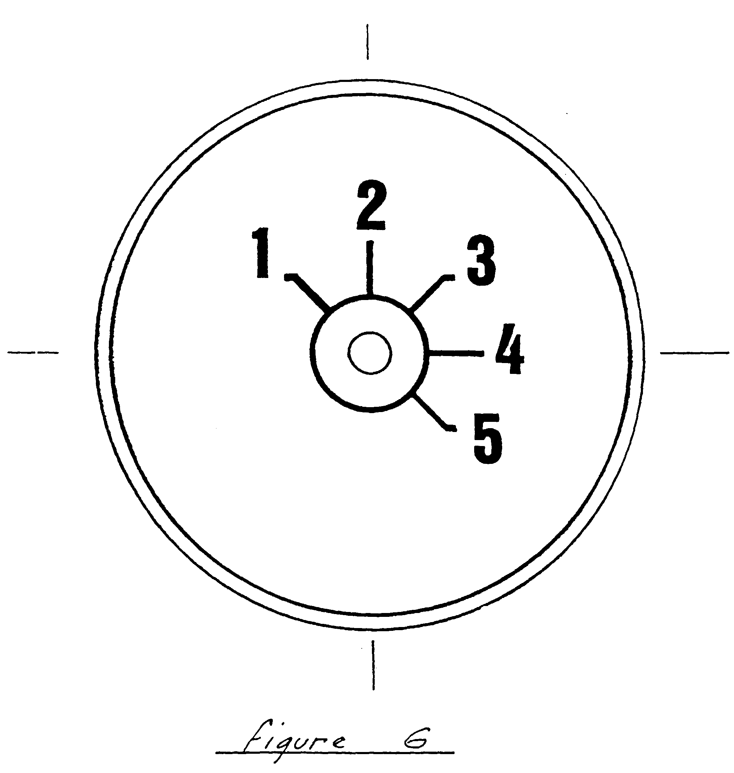

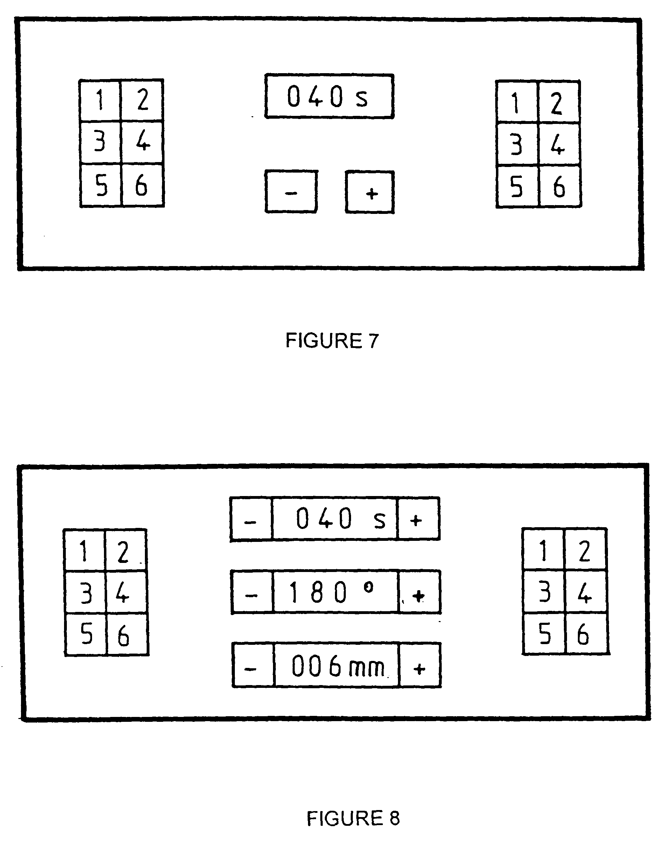

Le système de commande illustré aux figures 6 à 8 permet un préréglage programmable de tous les paramètres pouvant intervenir dans la cuisson, c'est-à-dire:
- le temps de cuisson peut être prédéterminé à la seconde près,
- la température de cuisson peut être prédéterminée au degré près,
- l'espacement parallèle (EP), c'est-à-dire l'épaisseur de cuisson, peut être prédéterminé au dixième de millimètre près.

## Revendications

1. Appareil de cuisson double face, comprenant au moins une plaque inférieure fixe (24, 124) et une plaque supérieure mobile (32) de cuisson, la plaque supérieure étant portée par un couvercle (30), et un dispositif automatique (40, 140) comprenant des moyens d'actionnement (50, 150) et des moyens d'arrêt (55) de la plaque supérieure pour lui faire subir un déplacement en pivotement suivi d'une translation linéaire pour l'amener jusque dans une position déterminée où elle est parallèle au plan de la plaque inférieure, et ménage celle-ci avec un espace déterminé, caractérisé en ce que les moyens d'actionnement en translation de la plaque supérieure comportent deux axes de forme (34, 36) portés par le couvercle (30) et logés dans les orifices d'insertion (43) prévus sur les moyens d'actionnement, les orifices présentant une superficie légèrement supérieure à la section de l'axe, de sorte que la translation du couvercle portant la plaque supérieure s'effectue, en fin de déplacement en translation selon une direction (A A') inclinée par rapport aux plans parallèles des deux plaques.

2. Appareil de cuisson selon la revendication 1, caractérisé en ce que ledit dispositif automatique (40, 140) comprend au moins un vérin (50) du type électrique comportant un limiteur de couple réglable.

3. Appareil de cuisson l'une quelconque des revendication 1 à 3, caractérisé en ce que les moyens d'actionnement (50, 150) permettent le levage et l'abaissement de la plaque supérieure (32, 132).

4. Appareil de cuisson selon l'une quelconque des revendications 1 à 3, caractérisé en ce que les moyens d'actionnement (50, 150) comprennent un bras, de préférence deux bras (42, 44), supportant le couvercle (30) et montés à pivotement sur un axe de rotation (23, 123).

5. Appareil de cuisson selon l'une quelconque des revendications précédentes, caractérisé en ce que le dispositif automatique (40, 140) est constitué d'un vérin (50) du type électrique automoteur à vis, avec réducteur.

6. Appareil de cuisson selon l'une quelconque des revendications précédentes, caractérisé en ce que le moyen d'arrêt de ladite plaque supérieure est constitué d'un contrôleur de course multipoints (55) réglable électroniquement, associé au vérin.

7. Appareil de cuisson selon l'une quelconque des revendications 1 à 4, caractérisé en ce que les moyens d'actionnement (50, 150) comprennent un vérin électrique équipé d'un moteur frein et en ce que les moyens d'arrêt (55) de la plaque actionnée comprennent un dispositif inductif (60) comportant au moins un détecteur inductif (66) ainsi qu'un élément de déclenchement dudit détecteur.

8. Appareil de cuisson selon la revendication 7, caractérisé en ce que le dispositif inductif comprend un support (62) fixé à l'appareil de cuisson, une vis de réglage (64) sur laquelle est fixé ledit détecteur (66), ainsi qu'une came (48) permettant le déclenchement dudit détecteur inductif (66).

9. Appareil de cuisson selon l'une quelconque des revendications 4 à 8, caractérisé en ce que le couvercle (30) peut être dissocié du bras (42, 142).

10. Appareil de cuisson selon la revendication 1, caractérisé en ce que les moyens d'actionnement d'une desdites plaques constituent un vérin hydraulique.

11. Appareil de cuisson selon l'une quelconque des revendications précédentes, caractérisé en ce que le dispositif automatique d'actionnement et d'arrêt (55) de la plaque est relié à un système de commande à commutateurs, à touches digitales ou autres, permettant la sélection de l'espacement parallèle entre la plaque supérieure et la plaque inférieure.

12. Appareil de cuisson selon la revendication 11, caractérisé en ce que ledit système de commande est programmable et en ce qu'il permet d'intégrer et de contrôler les paramètres relatifs à la cuisson notamment à la température, le temps de cuisson ou l'espacement parallèle entre les plaques supérieure et inférieure de cuisson.

13. Appareil de cuisson selon l'une quelconque des revendications précédentes, caractérisé en ce que le chauffage des plaques de cuisson est effectué au moyens de résistances électriques de préférence, ou bien au gaz ou par induction.

14. Appareil de cuisson selon l'une quelconque des revendications précédentes, caractérisé en ce que les plaques de cuisson supérieure et/ou inférieure est/sont lisse(s) ou rainurée(s), en acier doux ou mi-dur chromé, en inox, en matière bi-métal acier doux et inox ou en Téflon.

15. Appareil de cuisson selon la revendication 13, caractérisé en ce que la plaque de cuisson inférieure est lisse ou rainurée et en acier doux ou en acier mi-dur chromé et en ce que la plaque de cuisson supérieure est en matière inox ou en matière bi-métal acier doux et inox.

## Claims

1. A cooking appliance having two faces and comprising at least a fixed bottom cooking plate (24, 124) and a moving top cooking plate (32), the top plate being carried by a cover (30), and automatic apparatus (40, 140) comprising actuator means (50, 150) and stop means (55) for the top plate to cause it to be subjected to pivoting displacement followed by linear translation so as to bring it into a determined position where it is parallel with the plane of the bottom plate, and where it leaves a determined gap relative thereto, the appliance being characterized in that the means for actuating the top plate in translation include two shaped pins (34, 36) carried by the cover (30) and received in insertion orifices (43) provided on the actuator means, the orifices being of area slightly greater than the section of the pins so that, at the end of displacement in translation, the movement in translation of the cover carrying the top plate takes place along a direction (AA') that is inclined relative to planes parallel to the two plates.

2. A cooking appliance according to claim 1, characterized in that said automatic apparatus (40, 140) comprises at least one electrical type actuator (50) including an adjustable torque limiter.

3. A cooking appliance according to claim 1 or 2, characterized in that the actuator means (50, 150) enable the top plate (32, 132) to be raised and lowered.

4. A cooking appliance according to any one of claims 1 to 3, characterized in that the actuator means (50, 150) comprise an arm, preferably two arms (42, 44), supporting the cover (30) and pivotally mounted on a pivot axis (23, 123).

5. A cooking appliance according to any preceding claim, characterized in that the automatic apparatus (40, 140) is constituted by an actuator (50) of self-propelled electrical type having a screw and a gear box.

6. A cooking appliance according to any preceding claim, characterized in that the stop means for said top plate is constituted by a multipoint stroke controller (55) that is electronically adjustable and associated with the actuator.

7. A cooking appliance according to any one of claims 1 to 4, characterized in that the actuator means (50, 150) comprise an electrical actuator fitted with a brake motor, and in that the top means (55) for the actuated plate comprise an inductive device (60) including at least one inductive detector (66) and an element for triggering said detector.

8. A cooking appliance according to claim 7, characterized in that the inductive device comprises a support (62) fixed to the cooking appliance, an adjustment screw (64) on which said detector (66) is fixed, and a cam (48) enabling said inductive detector (66) to be triggered.

9. A cooking appliance according to any one of claims 4 to 8, characterized in that the cover (30) can be dissociated from the arm (42, 142).

10. A cooking appliance according to claim 1, characterized in that the actuator means of one of said plates constitute a hydraulic actuator.

11. A cooking appliance according to any preceding claim, characterized in that the automatic apparatus for actuating and stopping (55) the plate is connected to a control system having switches, touch keys, or the like, enabling the size of the gap between the top plate and the bottom plate to be selected.

12. A cooking appliance according to claim 11, characterized in that said control system is programmable, and in that it enables parameters relating to cooking, in particular temperature, cooking time, or size of the gap between the top and bottom cooking plates, to be integrated and controlled.

13. A cooking appliance according to any preceding claim, characterized in that the cooking plates are heated preferably by electrical resistance means, or else by gas, or by induction.

14. A cooking appliance according to any preceding claim, characterized in that the top and/or bottom cooking plates is/are smooth or grooved, being made of chromium-plated medium-hard steel or mild steel, of stainless steel, of bimetallic mild steel and stainless steel material, or of Teflon.

15. A cooking appliance according to claim 13, characterized in that the bottom cooking plate is smooth or grooved and of chromium-plated medium-hard steel or mild steel, and in that the top cooking plate is made of stainless steel material or of bimetallic mild steel and stainless steel material.

## Patentansprüche

1. Doppelflächenkochgerät, mit mindestens einer unteren festen Platte (24, 124) und einer oberen beweglichen Kochplatte (32), wobei die obere Platte durch einen Deckel (30) getragen wird, und mit einer automatischen Vorrichtung (40, 140), die Antriebsmittel (50, 150) und Anhaltemittel (55) der oberen Platte umfaßt, um sie einer Verschiebung unter Schwenken zu unterwerfen, gefolgt von einer linearen Translation, um sie bis in eine vorbestimmte Stellung zu überführen, in der sie parallel zur Ebene der unteren Platte ist und mit einem vorbestimmten Abstand angeordnet ist, dadurch gekennzeichnet, daß die Mittel zum Antrieb der oberen Platte in der Translation zwei Formachsen (34, 36) aufweisen, die durch den Deckel (30) getragen werden und in Einführungsöffnungen (43) untergebracht sind, die auf den Antriebsmitteln vorgesehen sind, wobei die Öffnungen eine Oberfläche aufweisen, die etwas größer als der Querschnitt der Achse ist, derart, daß sich die Translation des die obere Platte tragenden Deckels nach der Translationsverschiebung entlang einer Achse (A, A') vollzieht, die bezüglich den parallelen Ebenen der beiden Platten geneigt ist.

2. Kochgerät nach Anspruch 1, dadurch gekennzeichnet, daß die automatische Vorrichtung (40, 140) mindestens ein Stellglied (50) von elektrischem Typ mit einem einstellbaren Kopplungsbegrenzer umfaßt.

3. Kochgerät nach einem der Ansprüche 1 bis 3, dadurch gekennzeichnet, daß die Antriebsmittel (50, 150) das Anheben und das Absenken der oberen Platte (32, 132) erlauben.

4. Kochgerät nach einem der Ansprüche 1 bis 3, dadurch gekennzeichnet, daß die Antriebsmittel (50, 150) einen Arm umfassen, vorzugsweise zwei Arme (42, 44), die den Deckel (30) tragen und schwenkbar auf einer Drehachse (23, 123) befestigt sind.

5. Kochgerät nach einem der vorhergehenden Ansprüche, dadurch gekennzeichnet, daß die automatische Vorrichtung (40, 140) durch ein Stellglied (50) von der Art eines elektrischen Auto-Schraubenmotors mit Untersetzungsgetriebe gebildet ist.

6. Kochgerät nach einem der vorhergehenden Ansprüche, dadurch gekennzeichnet, daß das Mittel zum Anhalten der oberen Platte durch einen elektronisch abstimmbaren Vielpunkt-Laufsteuerer (55), der mit dem Stellglied verbunden ist, gebildet ist.

7. Kochgerät nach einem der Ansprüche 1 bis 4, dadurch gekennzeichnet, daß die Antriebsmittel (50, 150) ein elektrisches Stellglied umfassen, das einem Bremsmotor ausgestattet ist, und daß die Mittel zum Anhalten (55) der angetriebenen Platte eine induktive Vorrichtung (60) umfassen, die mindestens einen induktiven Detektor (66) umfassen, wie auch ein Element zum Auslösen des Detektors.

8. Kochgerät nach Anspruch 7, dadurch gekennzeichnet, daß die induktive Vorrichtung einen mit dem Kochgerät verbundenen Träger umfaßt, eine Steuerschraube (64), an der der Detektor (66) befestigt ist, wie auch einen Nocken (48), der das Auslösen des induktiven Detektors (66) ermöglicht.

9. Kochgerät nach einem der Ansprüche 4 bis 8, dadurch gekennzeichnet, daß der Deckel (30) von dem Arm (42, 142) gelöst werden kann.

10. Kochgerät nach Anspruch 1, dadurch gekennzeichnet, daß die Mittel zum Antrieb einer der Platten ein hydraulisches Steuerglied umfassen.

11. Kochgerät nach einem der vorhergehenden Ansprüche, dadurch gekennzeichnet, daß die automatische Vorrichtung zum Antrieb und zum Anhalten (55) der Platte mit einem System zur Steuerung durch Schalter verbunden ist mit digitalen oder sonstigen Tasten, die die Auswahl des parallelen Abstands zwischen der oberen Platte und der unteren Platte ermöglichen.

12. Kochgerät nach Anspruch 11, dadurch gekennzeichnet, daß das Steuersystem programmierbar ist, und daß es es erlaubt, Parameter bezüglich des Kochens zu integrieren und zu steuern, insbesondere bezüglich der Temperatur, der Kochzeit oder dem parallelen Abstand zwischen der oberen Platte und der unteren Platte des Kochgeräts.

13. Kochgerät nach einem der vorhergehenden Ansprüche, dadurch gekennzeichnet, daß das Heizen der Kochplatten vorzugsweise mittels elektrischer Widerstände erfolgt, oder mit Gas oder durch Induktion.

14. Kochgerät nach einem der vorhergehenden Ansprüche, dadurch gekennzeichnet, daß die obere und/oder untere Kochplatte(n) glatt oder gerillt ist/sind und aus weichem Stahl oder halbhartem Chromstahl besteht, aus Inox, aus Bimetallmaterial mit weichem Strahl und Inox oder aus Teflon besteht.

15. Kochgerät nach Anspruch 13, dadurch gekennzeichnet, daß die untere Kochplatte glatt oder gerillt ist und aus weichem Stahl oder aus halbhartem Chromstahl besteht, und daß die obere Kochplatte aus Inox oder aus Bimetallmaterial mit weichem Stahl und Inox besteht.
